# EUROPEAN PATENT SPECIFICATION

(11) **EP 3 350 027 B1**
(45) Date of publication and mention of the grant of the patent: **05.08.2020**
(21) Application number: 15903841.3
(22) Date of filing: 16.09.2015
(51) Int. Cl.: B60R 21/205, B60R 21/215

(54) **AIRBAG COVERING**
ABDECKUNG FÜR AIRBAG
DISPOSITIF DE RECOUVREMENT DE COUSSIN DE SÉCURITÉ GONFLABLE

(43) Date of publication of application: 25.07.2018
(73) Proprietor: Faurecia (China) Holding Co., Ltd., Shanghai 201109 (CN)
(72) Inventor: LIN, Tom, Shanghai 201109 (CN); PAN, Vivian, Shanghai 201109 (CN); CHEN, Peter, Shanghai 201109 (CN)
(74) Representative: Plasseraud IP
(86) International application number: PCT/CN2015/089712
(87) International publication number: WO 2017/045151

(56) References cited:
- EP-A1- 2 233 372
- WO-A1-02/098713
- WO-A1-2014/069654
- CN-A- 101 531 172
- CN-A- 103 317 654
- CN-Y- 201 143 921
- CN-Y- 201 143 921
- FR-A1- 2 924 989
- JP-A- H10 119 687
- JP-A- 2004 026 053
- US-A- 5 322 324
- US-A- 6 065 771
- US-A1- 2004 256 879

## Description

### Field of the invention

The invention relates to an airbag covering, in particular to an airbag covering mounted on an instrument panel or steering wheel of a vehicle.

### Background of the invention

Airbag is generally mounted within an instrument panel or steering wheel of a vehicle, which is deployed to protect the safety of occupant during a collision. When the airbag is folded, it is covered in an airbag firing channel of the instrument panel or steering wheel of the vehicle by an airbag covering.

Airbag covering comprises airbag flap covered with a foam layer formed of foam, for covering the airbag firing channel containing an airbag, such airbag flap together with the foam layer is broken when the airbag is to deploy, so that the airbag is inflated rapidly and released outward the instrument panel or steering wheel of the vehicle to protect the body and head of the occupant during a crash event.

However, during the inflation, people cannot control the breaking point of the foam layer. Moreover, during the inflation a rapid chemical reaction generates lots of heat gas to inflate the airbag and such heat gas makes the foam hot, and it may scald the occupant if foam breaks and splashes randomly, therefore, we cannot afford to ignore the potential risk of damage by the splashing foam.

Document WO2008012436 provides an airbag covering for an instrument panel of a vehicle, which can control the breaking position of the foam of the foam layer to prevent foam splashing. However, it controls the breaking of foam by an arrangement of thinning elements in the foaming layer, such thinning element is difficult to produce, with an requirement of additional materials, and is thus costly. On the other hand, such airbag covering may only roughly control the breaking position of the foam layer, and is still impossible to precisely control the first breaking point; therefore the control effect is still far away from the perfect condition.

Document US 6,065,771 provides an airbag covering comprising a side wall defining an airbag firing channel, an airbag flap covering the airbag firing channel, a foam layer covered onto the outer side of the airbag flap, a skin layer covered onto the foam layer, and a support connecting with the airbag flap and supporting the foam layer, a weakening structure being formed in the airbag flap, said weakening structure having a cross section forming a reverse V-type angle having a tip, whereby the tip of the reverse V-type angle is inserted into the foam layer.

### Summary of the invention

The purpose of the invention is to overcome one or more of these drawbacks described in the background art.

For this purpose, the invention proposes an airbag covering according to claim 1 with the advantages of ease of manufacture, able to precisely control the first breaking point of the foam layer, meanwhile, decreasing the foaming splash area and splash risk.

The airbag covering has a weakening structure which breaks firstly when the airbag is to deploy so as to decrease foam splash. Moreover, the airbag covering further comprises an additional weakening structure which may precisely control the first breaking point of the foam, so as to prevent the occupant from the scorching fragments of foam during the inflation of the airbag. In this way, no need to manufacture additional elements to control the breaking position of foam, and such airbag is easy for manufacture at low cost.

One and/or more of the following arrangements may be used in various embodiments of the airbag covering according to the invention:
In an advantageous embodiment, the airbag covering may further comprise:
the skin layer comprising an additional weakening skin structure aligning with said additional weakening structure.

In an advantageous embodiment, said airbag flap has a pivot edge pivotally fixed in the airbag covering and a breaking edge opposite to the pivot edge, said additional weakening structure is arranged at the middle of the breaking side of the airbag flap, in this way, to guarantee equal force in both sides of the airbag flap and foam layer during the inflation of the airbag, which avoids the situation of first breaking point concentrating on one side of the airbag flap or foam layer and causing unwanted damage to the occupant by uncontrollable scorching fragments of foam created by the inflation.

In an advantageous embodiment, said additional weakening skin structure is present as a V-notch on the skin layer, so that during the inflation of the airbag, the bent line of the V-notch is broken firstly.

According to the invention, said weakening structure has a cross section presenting as a reverse V-type bevel, and the tip of the reverse V-type bevel is inserted into the foam layer, so that during the inflation of the airbag, the tip of the reverse V-type bevel is broken firstly.

Further according to the invention, in the cross section, presenting as the reverse V-type bevel, of the weakening structure, the support integrates with the side wall and extends towards the foam layer to become a first bevel portion, said airbag flap comprises a second bevel portion curvedly extending from the airbag flap and intersecting with the first bevel portion to form an angle.

In an advantageous embodiment, said additional weakening structure extends along a projection direction of the second bevel portion on the airbag flap.

In an advantageous embodiment, the angel between the first bevel portion and the second bevel portion is between 30° to 60°, preferably 45°, so that the foam splash area is decreased.

In an advantageous embodiment, the first bevel portion has a thickness decreasing with the increase of its extending length, to ensure breaking start from the extending section of the first bevel portion.

In an advantageous embodiment, the second bevel portion has a thickness decreasing with the increase of its extending length, to ensure breaking start from the extending section of the second bevel portion.

### Brief description of the drawings

It should be understood that all features, alternatives and/or embodiments of the present invention can be associated according to various combinations in so far as they are not incompatible or exclusive with each other.

The present invention will be better understood and other features and advantages will become apparent upon reading the following detailed description, including embodiments as particular non-limiting examples with reference to the attached drawings, can be used to complete the understanding of the present invention and the disclosure of its implementation and, where appropriate, contribute to its definition, in which:
- Fig. 1 is a front view of an airbag covering according to an embodiment of the invention;
- Fig. 2 is a cross section view of the airbag of Fig. 1 along A-A line;
- Fig. 3 is a partial enlarged drawing of the front additional weakening structure of the airbag covering of Fig. 1;
- Fig. 4 is a back view of the airbag covering of Fig. 1;
- Fig.5 is a partial enlarged drawing of the back additional weakening structure of the airbag covering of Fig. 4.

### Detailed description of the invention

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

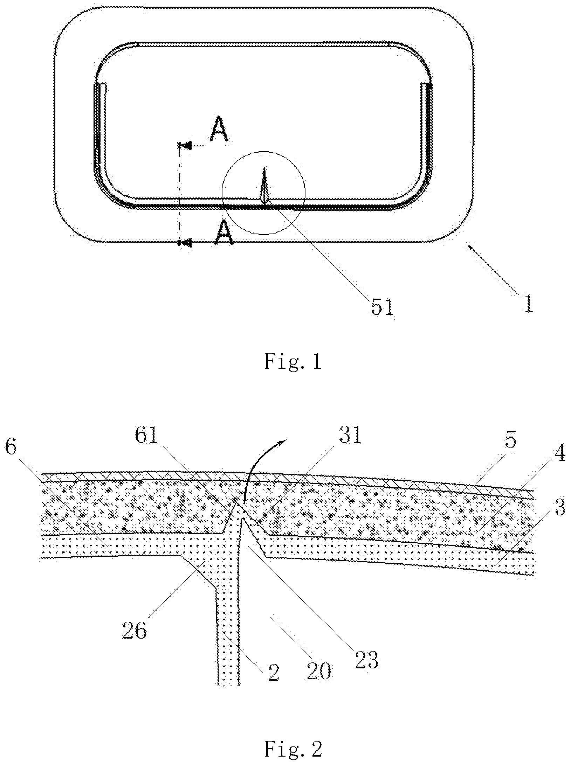

Fig. 1 is a front view of an airbag covering 1 according to an embodiment of the invention; such airbag covering is mounted on the instrument panel or steering wheel of a vehicle, for covering an airbag firing channel 20. During the inflation of the airbag, the airbag covering breaks to release the airbag and protect the occupant.

Fig. 2 is a cross section view of the airbag of Fig. 1 along A-A line, the airbag covering covers the airbag firing channel 20 (as shown in lower right corner of Fig. 2) containing an inflatable airbag.

Airbag covering 1 comprises a side wall 2 which defines and surrounds an airbag firing channel 20 for guiding the deployment of the airbag, and an airbag flap 3 which covers the airbag firing channel 20. When the airbag is inflated, the airbag opens the airbag flap (3) and extends outwardly from the airbag firing channel 20.

The airbag flap 3 comprises a pivot edge (not shown) pivotally fixed in the airbag covering and a breaking edge opposite to the pivot edge, when the airbag is to deploy, the breaking edge of the airbag flap 3 breaks and rotates outwards in the action of the pivot edge, the rotation direction of the airbag flap is indicated as the arrow shown in Fig. 2. Moreover, the airbag flap 3 further has an outer surface which is covered with a foam layer 4 covered with a skin layer 5. And the airbag covering further comprises a support 6 which is substantially in the same plane with the airbag flap 3, for supporting the foam layer 4 and the skin layer 5, together with the airbag flap 3. The support 6 may be made by using plastic injection molding, optionally, integrated with the airbag flap 3 and the side wall 2 as one piece. When the airbag is inflated, the airbag flap breaks firstly and drives the foam layer 4 and skin layer 5 to break in sequence, so to release the airbag to protect the occupant in case of a crash event.

In the embodiment, the intersection among the airbag flap 3, the side wall 2 and the support 6 is formed as a weakening structure. As shown in the cross section view of Fig. 2, the side wall 2 is substantially perpendicular to the support 6 and extends a distance towards the foam layer 4, the extension is called as a first bevel portion 61. And one end, closing to the tip of the first bevel portion 61, of the airbag flap 3 is bent, especially circularly curvedly bent, and connected to the first bevel portion 61, this bent section of the airbag flap 3 is called as a second bevel portion 31. The first bevel portion 61 and the second bevel portion 31 are combined together and form a weakening structure with a reverse V-type angle between 30° to 60°, preferably 45°, the tip of the weakening structure is inserted in the foam layer 4 but not reach the skin layer 5. During the inflation of the airbag, the reverse V-type weakening structure breaks firstly from the tip and along the breaking edge of the airbag flap, so as to form a breaking profile.

Preferably, the first and the second bevel portion each has a thickness decreasing with the increase of its extending length, so that the tip of the V-type weakening structure is the thinnest part which breaks firstly when the airbag is inflated.

A hollow space 23 is provided between the second bevel portion 31 of the airbag flap 3 and the first bevel portion 61 of the side wall 2, the strength of structure around the hollow space is the weakest part in the structure, so that the first bevel portion 61 and the second bevel portion 31 will break firstly during the inflation of the airbag.

An enhanced structure 26 is provided between the wall 2 and the support 6, the enhanced structure is formed as a rib connecting between the bottom side of the support and the lateral side of the side wall, to further ensure that the tip of the reverse V-type weakening structure breaks firstly.

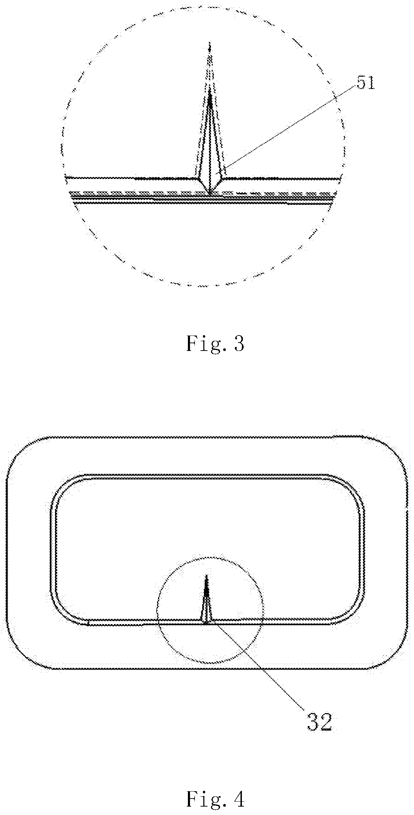

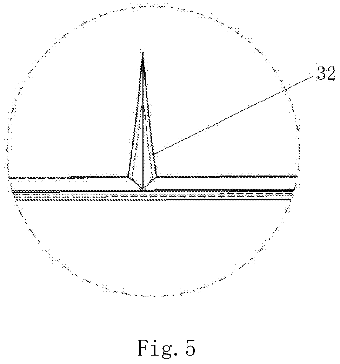

As shown in Figs. 3-5, additional weakening structures are provided on both front side and back side of the airbag covering, one arranged in the skin layer 5 is called as front additional weakening structure, also called as additional weakening skin structure, the other one aligned with the front additional weakening structure and arranged on the bottom side of the airbag flap 3 is called as back additional weakening structure.

More particularly, the back additional weakening structure is arranged at the middle of the broken side of the airbag flap. In this way, when the airbag is inflated, the additional weakening structure of the airbag flap breaks firstly, so that the first breaking point of the airbag covering is precisely defined.

The front additional weakening structure is present as a V-notch 51 on the skin layer, and the back additional weakening structure is present as a V-notch 32 on the bottom side of the airbag flap.

The rest part of the airbag covering may have a same or similar cross section as the above said, optionally, may have no weakening structure as the above said.

The above embodiment is only described as an example, without limiting the scope of the present invention. Upon the above, a person skilled in the art may expect to other implementations which can achieve the same function within the protection scope of the claims of the present invention.

Various other embodiments and various changes and modifications to the disclosed embodiment(s) will become apparent to those skilled in the art. Particularly, otherwise explicitly mentioned, all above described features, alternatives and/or embodiments of the present invention can be combined with each other as far as they are not incompatible or mutually exclusive of others. All such other embodiments, changes, and modifications are intended to come within the scope of the appended claims. Such as, the size of the V-notch 51 of the front additional weakening structure may be greater, less than or equal to the size of the V-notch 32 of the back additional weakening structure.

## Claims

1. An airbag covering (1), comprising :
- a side wall (2) defining an airbag firing channel (20), and
- an airbag flap (3) covering the airbag firing channel (20),
- a foam layer (4) covered onto the outer side of the airbag flap (3),
- a skin layer (5) covered onto the foam layer (4),
- a support (6) connecting with the side wall (2) and the airbag flap (3) and supporting the foam layer (4);
a weakening structure is formed in the intersection of the airbag flap (3) and the side wall (2), said airbag flap (3) further comprising an additional weakening structure abutting against said weakening structure, so that when the airbag is to deploy, the additional weakening structure of the airbag flap is configured to break firstly to release the airbag,
said weakening structure having a cross section forming a reverse V-type angle having a tip, wherein the tip of the reverse V-type angle is inserted into the foam layer (4),
wherein in the cross section, the support (6) is substantially perpendicular to the side wall (2) so as to form a first bevel portion (61) extending from the intersection between the support (6) and the side wall (2) towards the foam layer (4); and
wherein said airbag flap (3) comprises a second bevel portion (31) curvedly extending from the airbag flap (3) and intersecting with the first bevel portion (61) so as to form the reverse V-type angle.

2. According to the airbag covering of claim 1,
wherein said skin layer (5) further comprises an additional weakening skin structure aligning with said additional weakening structure.

3. According to the airbag covering of claim 2, wherein said airbag flap (3) has a pivot edge pivotally fixed in the airbag covering and a breaking edge opposite to the pivot edge, said additional weakening structure is arranged at the middle of the breaking edge of the airbag flap (3).

4. According to the airbag covering of claim 2, wherein said additional weakening skin structure is present as a V-notch (51) on the skin layer (5).

5. According to the airbag covering of claim 1, wherein said additional weakening structure extends along a projection direction of the second bevel portion (31) on the airbag flap (3).

6. According to the airbag covering of claim 1, wherein the reverse V-type angel between the first bevel portion (61) and the second bevel portion (31) is between 30° to 60°, preferably 45°.

7. According to the airbag covering of claim 1, wherein the first bevel portion (61) has a thickness decreasing with the increase of its extending length.

8. According to the airbag covering of claim 1, wherein the second bevel portion (31) has a thickness decreasing with the increase of its extending length.

## Patentansprüche

1. Airbag-Abdeckung (1), umfassend:
- eine Seitenwand (2), welche einen Airbag-Schusskanal (20) definiert, und
- eine Airbag-Klappe (3), welche den Airbag-Schusskanal (20) abdeckt,
- eine Schaumschicht (4), welche auf die äußere Seite der Airbag-Klappe (3) gedeckt ist,
- eine Verkleidungsschicht (5), welche auf die Schaumschicht (4) gedeckt ist,
- eine Halterung (6), welche mit der Seitenwand (2) und der Airbag-Klappe (3) verbunden ist und die Schaumschicht (4) haltert;
wobei eine Schwächungsstruktur an der Schnittstelle der Airbag-Klappe (3) und der Seitenwand (2) gebildet ist, wobei die Airbag-Klappe (3) ferner eine zusätzliche Schwächungsstruktur umfasst, welche gegen die Schwächungsstruktur anliegt, so dass, wenn der Airbag zu entfalten ist, die zusätzliche Schwächungsstruktur der Airbag-Klappe dazu eingerichtet ist, zuerst zu brechen, um den Airbag freizugeben,
wobei die Schwächungsstruktur einen Querschnitt aufweist, welcher einen Winkel vom umgekehrten V-Typ bildet, welcher eine Spitze aufweist, wobei die Spitze des Winkels vom umgekehrten V-Typ in die Schaumschicht (4) eingesetzt ist,
wobei die Halterung (6), in dem Querschnitt, im Wesentlichen orthogonal zu der Seitenwand (2) ist, um einen ersten schrägen Abschnitt (61) zu bilden, welcher sich von der Schnittstelle zwischen der Halterung (6) und der Seitenwand (2) in Richtung der Schaumschicht (4) erstreckt; und
wobei die Airbag-Klappe (3) einen zweiten schrägen Abschnitt (31) umfasst, welcher sich von der Airbag-Klappe (3) her gekrümmt erstreckt und den ersten schrägen Abschnitt (61) schneidet, um den Winkel vom umgekehrten V-Typ zu bilden.

2. Airbag-Abdeckung nach Anspruch 1,
wobei die Verkleidungsschicht (5) ferner eine zusätzliche Verkleidung-Schwächungsstruktur umfasst, welche mit der zusätzlichen Schwächungsstruktur ausgerichtet ist.

3. Airbag-Abdeckung nach Anspruch 2, wobei die Airbag-Klappe (3) einen Schwenkrand, welcher schwenkbar in der Airbag-Abdeckung fixiert ist, und einen Bruchrand aufweist, welcher dem Schwenkrand entgegengesetzt ist, wobei die zusätzliche Schwächungsstruktur an der Mitte des Bruchrands der Airbag-Klappe (3) angeordnet ist.

4. Airbag-Abdeckung nach Anspruch 2, wobei die zusätzliche Verkleidung-Schwächungsstruktur als eine V-Kerbe (51) auf der Verkleidungsschicht (5) vorliegt.

5. Airbag-Abdeckung nach Anspruch 1, wobei sich die zusätzliche Schwächungsstruktur an der Airbag-Klappe (3) entlang einer Projektionsrichtung des zweiten schrägen Abschnitts (31) erstreckt.

6. Airbag-Abdeckung nach Anspruch 1, wobei der Winkel vom umgekehrten V-Typ zwischen dem ersten schrägen Abschnitt (61) und dem zweiten schrägen Abschnitt (31) zwischen 30° bis 60°, vorzugsweise 45°, beträgt.

7. Airbag-Abdeckung nach Anspruch 1, wobei der erste schräge Abschnitt (61) eine Dicke aufweist, welche mit der Zunahme seiner sich erstreckenden Länge abnimmt.

8. Airbag-Abdeckung nach Anspruch 1, wobei der zweite schräge Abschnitt (31) eine Dicke aufweist, welche mit der Zunahme seiner sich erstreckenden Länge abnimmt.

## Revendications

1. Dispositif de recouvrement de coussin de sécurité gonflable (1), comprenant :
- une paroi latérale (2) définissant un canal de déclenchement de coussin de sécurité gonflable (20), et
- un volet de coussin de sécurité gonflable (3) recouvrant le canal de déclenchement de coussin de sécurité gonflable (20),
- une couche de mousse (4) recouverte sur le côté extérieur du volet de coussin de sécurité gonflable (3),
- une couche d'enveloppe (5) recouverte sur la couche de mousse (4),
- un support (6) se reliant à la paroi latérale (2) et au volet de coussin de sécurité gonflable (3) et supportant la couche de mousse (4) ;
une structure d'affaiblissement est formée dans l'intersection du volet de coussin de sécurité gonflable (3) et de la paroi latérale (2), ledit volet de coussin de sécurité gonflable (3) comprenant en outre une structure d'affaiblissement supplémentaire venant en butée contre ladite structure d'affaiblissement de sorte que, lorsque le coussin de sécurité gonflable doit se déployer, la structure d'affaiblissement supplémentaire du volet de coussin de sécurité gonflable soit configurée pour rompre en premier pour libérer le coussin de sécurité gonflable,
ladite structure d'affaiblissement ayant une coupe transversale formant un angle de type en V inversé ayant une pointe, dans lequel la pointe de l'angle de type en V inversé est insérée dans la couche de mousse (4),
dans lequel, dans la coupe transversale, le support (6) est sensiblement perpendiculaire à la paroi latérale (2) de manière à former une première portion en biseau (61) s'étendant depuis l'intersection entre le support (6) et la paroi latérale (2) vers la couche de mousse (4) ; et
dans lequel ledit volet de coussin de sécurité gonflable (3) comprend une seconde portion en biseau (31) s'étendant de manière incurvée depuis le volet de coussin de sécurité gonflable (3) et étant en intersection avec la première portion en biseau (61) de manière à former l'angle de type en V inversé.

2. Dispositif de recouvrement de coussin de sécurité gonflable selon la revendication 1,
dans lequel ladite couche d'enveloppe (5) comprend en outre une structure d'enveloppe d'affaiblissement supplémentaire s'alignant avec ladite structure d'affaiblissement supplémentaire.

3. Dispositif de recouvrement de coussin de sécurité gonflable selon la revendication 2, dans lequel ledit volet de coussin de sécurité gonflable (3) a un bord de pivot fixé, de manière à pouvoir pivoter, dans le dispositif de recouvrement de coussin de sécurité gonflable et un bord de rupture à l'opposé du bord de pivot, ladite structure d'affaiblissement supplémentaire étant agencée au milieu du bord de rupture du volet de coussin de sécurité gonflable (3).

4. Dispositif de recouvrement de coussin de sécurité gonflable selon la revendication 2, dans lequel ladite structure d'enveloppe d'affaiblissement supplémentaire est présente sous la forme d'une encoche en V (51) sur la couche d'enveloppe (5).

5. Dispositif de recouvrement de coussin de sécurité gonflable selon la revendication 1, dans lequel ladite structure d'affaiblissement supplémentaire s'étend dans un sens de saillie de la seconde portion en biseau (31) sur le volet de coussin de sécurité gonflable (3).

6. Dispositif de recouvrement de coussin de sécurité gonflable selon la revendication 1, dans lequel l'angle de type en V inversé entre la première portion en biseau (61) et la seconde portion en biseau (31) est entre 30° et 60°, de préférence 45°.

7. Dispositif de recouvrement de coussin de sécurité gonflable selon la revendication 1, dans lequel la première portion en biseau (61) a une épaisseur décroissant avec l'augmentation de sa longueur d'extension.

8. Dispositif de recouvrement de coussin de sécurité gonflable selon la revendication 1, dans lequel la seconde portion en biseau (31) a une épaisseur décroissant avec l'augmentation de sa longueur d'extension.
